# EUROPEAN PATENT SPECIFICATION

(11) **EP 2 593 762 B1**
(45) Date of publication and mention of the grant of the patent: **22.06.2016**
(21) Application number: 11745567.5
(22) Date of filing: 13.07.2011
(51) Int. Cl.: G01K 15/00, G01F 1/68, G01F 25/00

(54) **SENSING AND MONITORING APPARATUS**
MESS- UND ÜBERWACHUNGSVORRICHTUNG
APPAREILLAGE DE DÉTECTION ET DE SURVEILLANCE

(30) Priority: 14.07.2010 GB 201011837
(43) Date of publication of application: 22.05.2013
(73) Proprietor: Influx Measurements Ltd., Hampshire SO24 9BH (GB)
(72) Inventor: TOWNER, Mark Bernard, Hampshire SO22 4QP (GB); SMITH, Melvyn Dean, Hampshire RG21 3LH (GB)
(74) Representative: Bonner, Catherine Louise
(86) International application number: PCT/GB2011/051313
(87) International publication number: WO 2012/007753

(56) References cited:
- EP-A1- 2 330 391
- US-A- 4 571 689
- US-A- 5 663 899
- US-A1- 2009 003 405

## Description

The present invention relates to a sensing apparatus particularly, but not exclusively, to a sensing apparatus for a sprinkler fire protection system.

It is known to provide monitoring systems using sensors such as differential temperature sensors for example as shown in US4901061. Monitoring devices in fire sprinkler systems often use paddle or vane actuated flow switches in order to initiate an alarm signal. Testing and checking such monitoring devices can be complex and requires a regular routine of maintenance, inspection and testing to be sure that the system and monitoring device is working and could function correctly in the case of a fire.

Monitoring device checking systems such as US6462655 go someway in simplifying routine planned testing. UK fire regulations state that such sprinkler systems with flow switches should be checked for correct function quarterly (BS EN 12845). The check and manual inspection of such systems and the test circuits at the intervals required is a burden on property owners and those using and managing properties with such sprinkler systems.

It is desirable to provide an improved sensing and testing apparatus and method for testing a fire sprinkler system.

US 5,663,899 discloses a plurality of thermocouples connected to an interface, the interface comprising a microprocessor receiving signals from the plurality of thermocouples, and further providing an output signal in response to the input signals.

US 4,571,689 discloses an automated multiple thermocouple testing device which can determine short and open circuits in a thermocouple system.

US 2009/003405 discloses a sensor diagnostic method to determine the rationality of one of three temperature sensors used in an exhaust aftertreatment system.

According to a first aspect, the invention provides a monitoring apparatus comprising at least three sensors capable of detecting a characteristic of a fluid to be monitored, the sensors located within said fluid to be monitored;
each sensor comprising a probe arranged to enclose a temperature sensing device;
a power circuit including a first current source, a second current source and a third current source, the first current source connected to a first temperature sensing device, the second current source connected to a second temperature sensing device, the third current source connected to a third temperature sensing device, the first current source and the second current source arranged to power respective first and second temperature sensing devices so as to cause self heating of the first temperature sensing device and the second temperature sensing device to a first temperature; the third current source arranged to power the third temperature sensing device so as to cause a minimum self heating of the third sensing device to a second temperature; wherein the first temperature is a higher temperature relative to the second;
a sensing circuit connected to each said sensor, each circuit comprising a member arranged to compare the voltage across a temperature sensing device and to output a signal indicative of a response of the probe of the temperature sensing device,
a first comparator for comparing the response of the second temperature sensing device with the response of the third temperature sensing device, and for comparing the response of the first temperature sensing device with the response of the third temperature sensing device and adapted to output a first compare signal,
a second comparator for comparing the response of the second temperature sensing device with the response of the first temperature sensing device and adapted to output a second compare signal,
a comparison circuit adapted to receive and compare the first compare signal and the second compare signal to determine the characteristics of the fluid to be monitored and to output a test signal;
and an output circuit adapted to receive a test signal and comprising means for indicating the characteristics of the fluid to be monitored.

The device can be used in pipes in a sprinkler system and can provide information on the instantaneous flow rate within the pipe so that an indication that a water flow system has been activated can be given. The sensors can be located within a section of the system to be monitored and in a location where flow can be expected once activated. The invention allows for a continuous checking of the monitoring device in an interim period in between regular maintenance inspections. Advantageously, the monitoring apparatus may alleviate the problem of making a manual inspection of the sprinkler or fluid system at the intervals recommended by health and safety standards. The checking can be provided in line and on demand to check the output and component function without disruption of the system. In this way a faulty sensor can be easily and swiftly located and replaced, serviced or removed as appropriate.

In an embodiment the monitoring apparatus may comprise a control circuit arranged in communication with the power circuit for controlling the power circuit. In this way control of the first, second and third power sources and control of the power delivered to the first, second and third sensors is provided. In an embodiment the first current source and the second current source are arranged to power the temperature sensing devices at a fixed ratio. A fixed power ratio places the temperature sensing devices in a predictable and pre-determined relationship to each other and avoids errors and inconsistencies in the sensors.

A monitoring apparatus of an embodiment may comprise at least four sensors, and include one of the sensors as a redundant sensor. Including a redundant sensor in the monitoring apparatus allows for a self test or verification function by inter comparison of the individual sensors without compromising the verification function of the system. The characteristic of the fluid may be one of the group of; a thermal property, a gas state, a liquid state. A full range of operating conditions and properties of the system can be looked for, for example as well as flow detection a fluid temperature and a dry pipe output can be registered, recorded and addressed as appropriate.

In an embodiment the temperature sensing device may be one of the group of; a thermocouple, a resistive thermal device (RTD), a thermal dispersion device and a platinum resistance thermometer, preferably a PT100 or a PT1000. A platinum resistance thermometer or resistance temperature device operates with good repeatability, stability and accuracy, important features for a monitoring and sensing system. The sensors and RTDs can be installed easily and are of a lower cost than components in an alternative testing and checking system using mechanical flow switch paddle devices.

In an embodiment the sensors are enclosed in outer metallic sheaths, the sheaths being capable of being immersed in the fluid to be monitored. The sheaths provide protection for the sensors from corrosion or dirt that could damage the sensor structure and could inhibit the temperature sensing performance. The apparatus may comprise an electrical output and audible alert means responsive to the test signal at the output circuit, this may assist users of the system to react and respond to a malfunction or other status of the system. In an embodiment there may be a plurality of sensors, and the number of sensors may be greater than three. A plurality of sensors allows verification and cross checking of the sensors within the system and allows resting or servicing of some sensors during regular operation. Improvements in safety and system reliability can be achieved with a plurality of sensors.

In an embodiment the sensing circuit may comprise at least one PID controller providing feedback. This type of controller provides a generic control loop feedback with proportional-integral-derivative control allowing adjustment of the power to the temperature sensing devices and achievement of a desired temperature in a smooth and repeatable manner.

A single housing may be adapted to accommodate the sensors. A single housing provides a support structure and some protection for the group of sensors and may provide for ease of assembly and fitting.

According to a second aspect, the invention provides a method of monitoring a fluid within a system, the method comprising providing at least three sensors and apparatus to execute the method steps of;
a) inserting the sensors into a fluid to be monitored;
b) executing a first comparison stage comprising (i) powering a first sensor to a fixed temperature or determined power level above a third sensor which is powered at a sufficiently low level such as to minimise self heating; (ii) powering a second sensor at a sufficiently low level so as to minimise self heating; (iii) comparing the response of the second sensor with the response of the third sensor to record the comparison;
c) executing a second comparison stage comprising (i) powering a second sensor to a fixed temperature or determined power level above a third sensor which is powered at a sufficiently low level such as to minimise self heating; (ii) comparing the response of the first sensor with the response of the second sensor to record the comparison;
d) executing a third comparison stage comprising (i) reducing the power to the first sensor to a sufficiently low level such as to minimise self heating allowing the first sensor to cool to a temperature substantially the same as the third sensor; (ii) comparing the response of the first sensor with the response of the third sensor to record the comparison;
e) executing a fourth comparison stage comprising (i) powering a first sensor to a fixed temperature or determined power level above a third sensor which is powered at a sufficiently low level such as to minimise self heating; (ii) comparing the response of the first sensor with the response of the second sensor to record the comparison;
f) outputting a signal at any of the preceding comparisons should the measurement of the electrical input required for the heating of any one sensor not correspond to a previously obtained response.

In an embodiment the method may include repeating the steps b) to f) in a continuous testing cycle. In an embodiment the fixed temperature difference is in the range from 2 to 60 degrees and in a further embodiment the fixed temperature difference is in the range from 5 to 30 degrees. In an embodiment the fixed temperature difference is 10 degrees.

The present invention is now described in more detail, with reference to the accompanying drawings, in which:
Figure 1 illustrates a perspective view of a sensor assembly forming part of the monitoring apparatus of the present invention;
Figure 2 illustrates a block diagram of a control circuit of the monitoring apparatus of the present invention;
Figure 3 illustrates a schematic diagram of a flow test system with a self test function using the sensor assembly of Figure 1; and
Figure 4 illustrates a table of results of sensing readings and functions for a flow test and monitoring apparatus of the present invention in a sprinkler system using the sensor assembly of Figure 1.

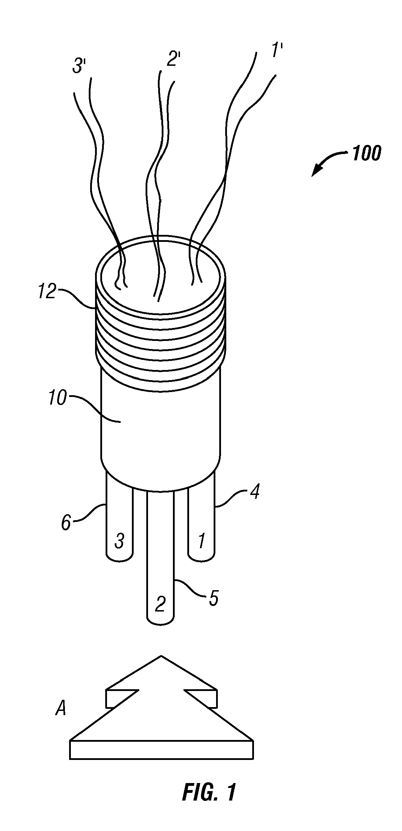

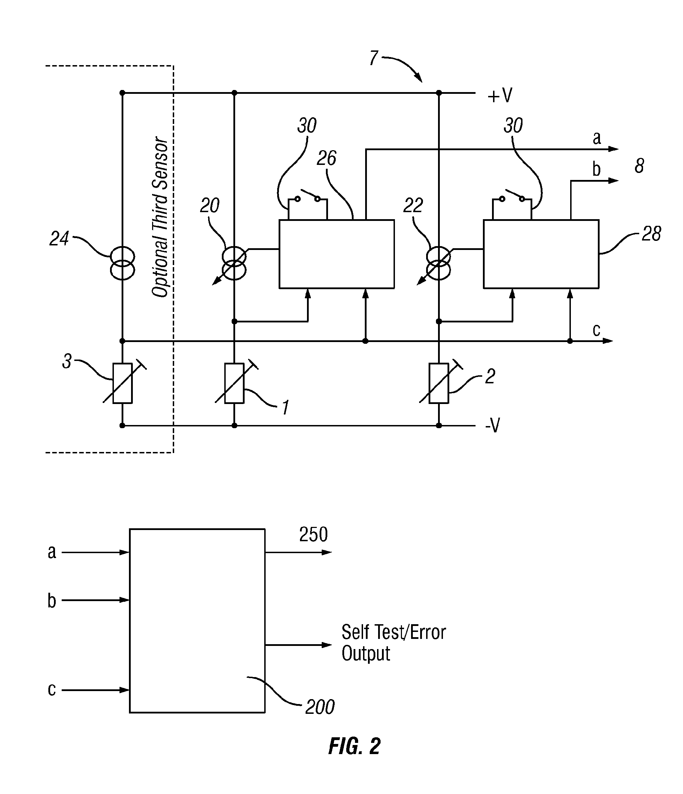

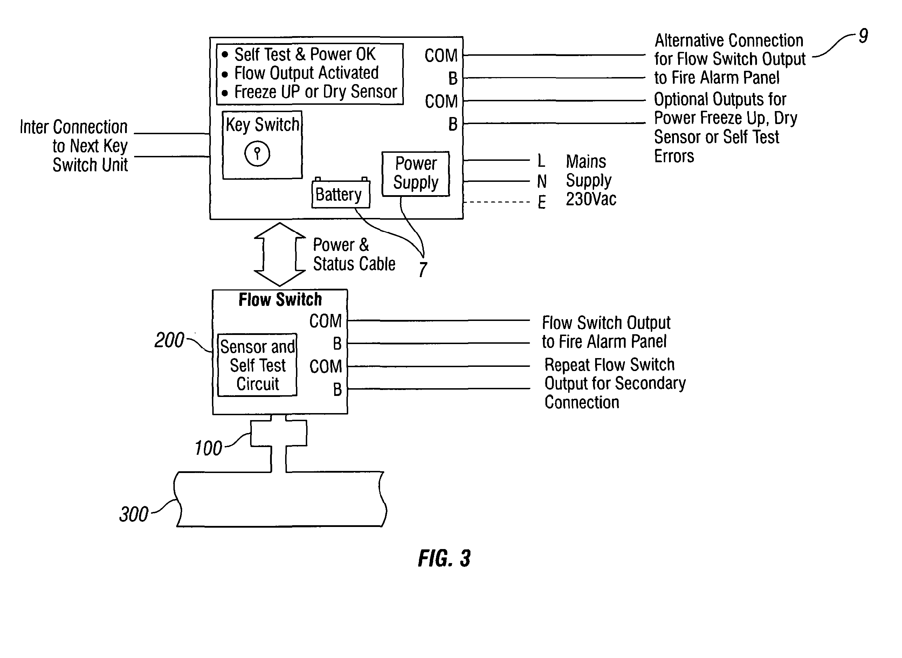

The structure of the sensors and the sensor assembly of the monitoring apparatus of the present invention will now be described with reference to Figure 1. The sensor assembly 100 comprises a cylindrical sensor housing or body portion 10 including a threaded portion 12 located at a distal end of the body 10. The threaded portion 12 is provided such that insertion and fixing within pipework (discussed below with reference to Figure 3) or a sprinkler system housing (not shown) can be achieved. Three (in the preferred embodiment) sensors 1, 2, 3 are connected to and distend from the lower portion (in use) of sensor body portion 10 to form sensor probes. Each sensor 1, 2, 3 comprises a resistance temperature device (RTD), a PT 100, in the preferred embodiment. The resistance temperature device at sensor 1 is located and housed within a metal sheath 4. Similarly sensor 2 and sensor 3 are housed within metal sheaths 5 and 6 respectively. The resistance temperature devices or sensors 1, 2 and 3 are connected in electrical communication with connectors 1', 2' and 3' respectively. The connectors 1', 2', 3' and associated electrical components are provided in electrical connection with a power circuit 7, a sensing circuit 8, a comparison circuit 200 and an output circuit 9 as described in the following with reference to Figure 2 and Figure 3.

For a sensor assembly 100 located within pipework of a sprinkler system the sensors 1, 2, 3, are immersed in the water flow in the pipe (indicated by arrow A) and can be operated in a manner so that the predictable change in electrical resistance of a resistance temperature device can be exploited to act as a temperature sensor to measure the temperature or other characteristic of the fluid and fluid flow. When the RTD probe is heated to a fixed temperature, set at around 10° C above the ambient, steady state temperature of the fluid in the pipework, measurement of the electrical input required for the heating can be correlated to the state or condition or properties of the fluid in the pipework. A fluid flow, such as that of water passing through an activated sprinkler system, or a gas or air around the RTD probe in a 'dry-pipe' condition will require different electrical input to heating in the steady state condition. The difference is exploited in the sensing and monitoring functionality described below.

Turning now to Figure 2, the control and power circuit connected to the sensor assembly 100 of Figure 1 is shown with sensors 1, 2 and 3 having like numerals as in Figure 1. A power circuit 7 is provided with a first current source 20 electrically connected to sensor, RTD, 1. The power circuit 7 is provided with a first current source 20 electrically connected to sensor, RTD, 1, power circuit 7 is provided with a second current source 22 electrically connected to sensor, RTD, 2. The current source 20 and the current source 22 are variable current sources for electrically powering and heating and then cooling RTDs 1 and 2 in a cycle as described in operation below. Power circuit 7 further comprises a fixed current source 24 electrically connected to sensor, RTD, 3. The fixed current source 24 is arranged so as to be electrically powered and heated at a low enough level so as not to cause self heating, in effect the RTD 3 remains cool and can be used as a control or constant temperature sensor for the other two RTDs, RTD 1 and RTD 2.

Variable current sources 20, 22 are connected in electrical communication with a first PID controller 26 and a second PID controller 28. PID controller 26 and PID controller 28 are connected to control the heating of RTDs 1 and 2 respectively in a series of heating and non-heating (i.e. cooling stages) such that comparison of the conditions of the RTDs 1 and 2 can be made with that of a RTD 3 in a cool or unheated state. Switches 30 provided across controller 26 and controller 28 are arranged to activate heating of RTD 1 and RTD 2 directed as required by the monitoring and testing function being executed.

The outputs from the PID controllers 26, 28 and the sensor, RTD 3 are fed into the comparison and logic circuit 200. Circuit details and connections for the circuit are shown in Figure 2, however the circuit could be implemented with any suitable arrangement of discrete analogue or digital electronics. A sensing circuit 8 receives output from power circuit 7 as shown in Figure 2 and output signals a and b from RTDs 1 and 2 and output signal c from RTD 3 are supplied to a logic and comparison circuit 200. The circuit 200 includes an output to a user interface 250 and a self test or error function.

In Figure 3, output circuit 9, comparison circuit 200 and power supply and circuit 7 are shown in communication with sensor assembly 100 located within a pipe 300 of a sprinkler system. The sprinkler system may include a number of sensor assemblies located at intervals along a pipe 300 and at key positions within the pipework. Connections are provided to sense a fluid flow, a lack of fluid flow and a dry or frozen condition. The connections are designated as common (COM in Figure 3) or normally open or closed condition (B in Figure 3).

In operation, the sensor assembly 100 is placed with sheathed probes, and sensors, 1, 2 and 3 into a fluid to be monitored, such as a pipe 300 containing a reservoir of stationary or flowing water in a sprinkler system.

The power circuit 7 with variable current sources 20, 22 and fixed current source 24 is arranged to electrically power the sensors 1, 2, 3 in line with the desired control and testing function. PID controllers 26 and 28 provide a feedback loop and control for RTD 1 and RTD 2.

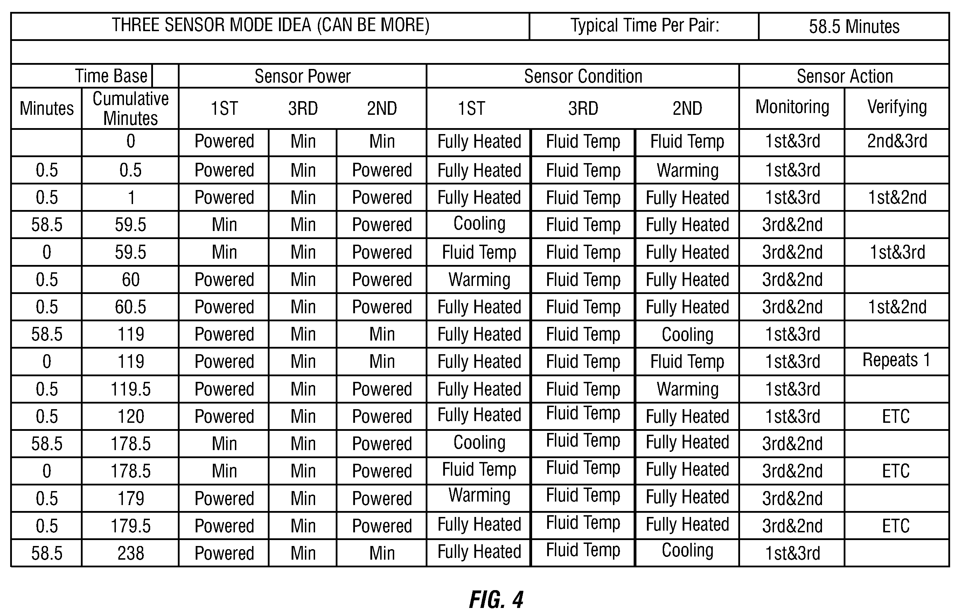

A series of heating and cooling stages are executed for the RTDS 1, 2 and 3 and comparison of the results leads to a table as set out in Figure 4. Specifically, the embodiment illustrated executes a series of heating stages alternately heating RTD 1, then RTD 2 and comparing the response from each with the response from the unheated RTD 3. Sensors are labeled with the same nomenclature in the table of Figure 4. Starting from the first row of the table in Figure 4, RTD 1 is powered by current source 20 to a temperature of around 5 to 30 degrees above the fluid temperature in the pipework and system. In the embodiment described the temperature is 10 degrees above the fluid ambient temperature, while neither RTD 2 or RTD 3 are electrically powered so as to cause significant self heating and stay at or close to pipe fluid ambient temperature. At this time a comparison is made between the temperature sensing response from RTD 2 and the response from RTD 3. Next, moving to rows 2 and 3 of the table in Figure 4 RTD 2 is electrically powered to a temperature similar to RTD 1 and RTD 3 is maintained at a level so as to cause minimum self heating, here a comparison of the response from RTD 2 and RTD 1 is made and compared with that previously obtained. In rows 4 and 5 electrical powering of RTD 1 ceases and is allowed to cool. Next a comparison of the response from RTD 1 is made with the response from RTD 3. Rows 6 and 7 of the table in Figure 4 show the steps of electrically powering RTD 1 again when a comparison between RTD 1 and RTD 2 is made. The final comparison stage is with cooling of RTD 2 in row 7 and row 8 (shown as a ceasing of electrical powering) before a comparison of the response from RTD 2 with RTD 3, as in the first stage, at row 1.

The heated sensors in this embodiment are RTD 1 and RTD 2, these are heated in turn to a pre-determined temperature above the cold (unheated) sensor, here RTD 3. When alternating from heating one sensor to heating the other a 'warm up' period is observed when both are heating, this is followed by a comparison time period used to check response readings and record any differences between the two. Then the initially heated sensor becomes unheated, enters a cooling down period after which it can be used to test and compare against the cool, unheated sensor, RTD 3. The cycle of heating and cooling repeats with the alternate sensor (either RTD 1 or RTD 2).

Thus the rotation of the sensor, RTD element, duty allows verification of the sensor elements by comparing the response of each against the others in the set, whilst continuously monitoring fluid condition. The testing and recording of comparisons of actual response obtained against the expected operational response can alert a user to faults or inaccuracies.

The comparative readings taken as described above could be used in an instantaneous manner to give a self test output, in an alternative the comparison signals could be recorded to provide detailed information on the operation and function of the system and any change in performance of the sensors over time. In an alternative embodiment the fixed current source 24 of RTD 3 comprises a variable current source and that RTD is also heated and cooled in turn as described above for RTDs 1 and 2. This sets up a three way rotational method of heating and cooling and could also be extended to a sensing system with multiple sensors, and more than three sensors. A response is used in a comparison operation, similar to that described above. The switch verification and testing method can be modified to also include another test for the output circuitry, this test could be conducted on a routine basis and independently verified.

In addition to the preferred embodiments described above alternatives and modifications to the monitoring and testing device may be envisaged without departing from the scope of the present invention. For example, a thermocouple with a separate heater may be used as a temperature sensing device instead of a resistance temperature device. An end of line resistor circuit may be included in the flow switch circuit. The circuits used could also include microprocessor technology to provide advanced algorithms and functions giving flow test switch output in a user readable format and additional types of self test and verification functionality and alerts. The heating and cooling cycle described is around 60 minutes, other shorter or longer cycles could be used and different temperature changes could be implemented from the increase in temperature of 10 degrees from the fluid ambient temperature described here.

It is envisaged that the monitoring and testing device would enhance the ease of use and safety function of fire prevention and alarm systems such as those including sprinklers.

## Claims

1. A monitoring apparatus comprising at least three sensors (1, 2, 3) capable of detecting a characteristic of a fluid to be monitored, the sensors (1, 2, 3) located within said fluid to be monitored;
each sensor comprising a probe arranged to enclose a temperature sensing device (1, 2, 3);
a power circuit (7) including a first current source (20), a second current source (22) and a third current source (24), the first current source (20) connected to a first temperature sensing device (1), the second current source (22) connected to a second temperature sensing device (2), the third current source (24) connected to a third temperature sensing device (3),
**characterised in that**
the first current source (20) and the second current source (22) are arranged to power respective first and second temperature sensing devices (1, 2) so as to cause self heating of the first temperature sensing device (1) and the second temperature sensing device (2) to a first temperature; the third current source (24) arranged to power the third temperature sensing device (3) so as to cause a minimum self heating of the third sensing device (3) to a second temperature; wherein the first temperature is a higher temperature relative to the second;
a sensing circuit (8) connected to each said sensor, each circuit (8) comprising a member arranged to compare the voltage across a temperature sensing device (1, 2, 3) and to output a signal indicative of a response of the probe of the temperature sensing device (1, 2, 3),
a first comparator for comparing the response of the second temperature sensing device (2) with the response of the third temperature sensing device (3), and for comparing the response of the first temperature sensing device (1) with the response of the third temperature sensing device (3) and adapted to output a first compare signal,
a second comparator for comparing the response of the second temperature sensing device (2) with the response of the first temperature sensing device (1) and adapted to output a second compare signal,
a comparison circuit (200) adapted to receive and compare the first compare signal and the second compare signal to determine the characteristics of the fluid to be monitored and to output a test signal;
and an output circuit (9) adapted to receive a test signal and comprising means for indicating the characteristics of the fluid to be monitored.

2. A monitoring apparatus according to Claim 1, further comprising a control circuit arranged in communication with the power circuit (7) for controlling the power circuit (7).

3. A monitoring apparatus according to Claim 1 or Claim 2, wherein the first current source (20) and the second current source (22) are arranged to power the temperature sensing devices (1, 2) at a fixed ratio.

4. A monitoring apparatus according to Claim 1, Claim 2 or Claim 3, wherein the apparatus contains at least four sensors, and one of the sensors is a redundant sensor.

5. A monitoring apparatus according to any preceding claim, wherein the characteristic of the fluid is one of the group of; a thermal property, a gas state, a liquid state.

6. A monitoring apparatus according to any preceding claim, wherein the temperature sensing device (1, 2, 3) is one of the group of; thermocouple, resistive thermal device (RTD), thermal dispersion device and platinum resistance thermometer, preferably PT100 or PT1000.

7. A monitoring apparatus according to any preceding claim, wherein the sensors (1, 2, 3) are enclosed in outer metallic sheaths (4), the sheaths (4) being capable of being immersed in the fluid to be monitored.

8. A monitoring apparatus according to any preceding claim, further comprising an electrical output and audible alert means responsive to the test signal at the output circuit (9).

9. A monitoring apparatus according to any preceding claim, comprising a plurality of sensors (1, 2 ,3), wherein the number of sensors is greater than three.

10. A monitoring apparatus according to any preceding claim, wherein the sensing circuit (8) comprises at least one PID controller (26).

11. A monitoring apparatus according to any preceding claim, further comprising a single housing (10) adapted to accommodate the sensors.

12. A method of monitoring a fluid within a system, the method comprising providing at least three sensors (1, 2, 3) and apparatus to execute the method step of;
a) inserting the sensors (1, 2, 3) into a fluid to be monitored; and
further including the characterising method steps of;
b) executing a first comparison stage comprising (i) powering a first sensor (1) to a fixed temperature or determined power level above a third sensor (3) which is powered at a sufficiently low level such as to minimise self heating; (ii) powering a second sensor (2) at a sufficiently low level so as to minimise self heating; (iii) comparing the response of the second sensor (2) with the response of the third sensor (3) to record the comparison;
c) executing a second comparison stage comprising (i) powering a second sensor (2) to a fixed temperature or determined power level above a third sensor (3) which is powered at a sufficiently low level such as to minimise self heating; (ii) comparing the response of the first sensor (1) with the response of the second sensor (2) to record the comparison;
d) executing a third comparison stage comprising (i) reducing the power to the first sensor (1) to a sufficiently low level such as to minimise self heating allowing the first sensor (1) to cool to a temperature substantially the same as the third sensor (3); (ii) comparing the response of the first sensor (1) with the response of the third sensor (3) to record the comparison;
e) executing a fourth comparison stage comprising (i) powering a first sensor (1) to a fixed temperature or determined power level above a third sensor (3) which is powered at a sufficiently low level such as to minimise self heating; (ii) comparing the response of the first sensor (1) with the response of the second sensor (2) to record the comparison;
f) outputting a signal at any of the preceding comparisons should the measurement of the electrical input required for the heating of any one sensor not correspond to a previously obtained response.

13. A method according to Claim 12, further comprising repeating steps b) to f) in a continuous testing cycle.

14. A method according to Claim 12 or Claim 13, wherein the fixed temperature difference is in the range from 2 to 60 degrees centigrade.

15. A method according to Claim 14, wherein the fixed temperature difference is in the range from 5 to 30 degrees centigrade, preferably 10 degrees centigrade.

## Patentansprüche

1. Überwachungsvorrichtung, die mindestens drei Sensoren (1, 2, 3) umfasst, die eine Eigenschaft eines zu überwachenden Fluids erfassen können, wobei die Sensoren (1, 2, 3) in dem zu überwachenden Fluid angeordnet sind;
wobei jeder Sensor Folgendes umfasst: eine Sonde, die so angeordnet ist, dass sie eine Temperaturerfassungsvorrichtung (1, 2, 3) umschließt;
einen Leistungsschaltkreis (7), der eine erste Stromquelle (20), eine zweite Stromquelle (22) und eine dritte Stromquelle (24) umfasst, wobei die erste Stromquelle (20) mit einer ersten Temperaturerfassungsvorrichtung (1) verbunden ist, die zweite Stromquelle (22) mit einer zweiten Temperaturerfassungsvorrichtung (2) verbunden ist und die dritte Stromquelle (24) mit einer dritten Temperaturerfassungsvorrichtung (3) verbunden ist,
**gekennzeichnet durch** Folgendes:
die erste Stromquelle (20) und die zweite Stromquelle (22) sind so angeordnet, dass sie jeweils die erste und zweite Temperaturerfassungsvorrichtung (1, 2) versorgen, um eine Selbsterwärmung der ersten Temperaturerfassungsvorrichtung (1) und der zweiten Temperaturerfassungsvorrichtung (2) auf eine erste Temperatur zu verursachen; wobei die dritte Stromquelle (24) so angeordnet ist, dass sie die dritte Temperaturerfassungsvorrichtung (3) versorgt, um eine minimale Selbsterwärmung der dritten Erfassungsvorrichtung (3) auf eine zweite Temperatur zu verursachen; wobei die erste Temperatur eine höhere Temperatur ist als die zweite Temperatur;
einen Erfassungsschaltkreis (8), der an jeden Sensor angeschlossen ist, wobei jeder Schaltkreis (8) ein Element umfasst, das dafür angeordnet ist, die Spannung an einer Temperaturerfassungsvorrichtung (1, 2, 3) zu vergleichen und ein Signal auszugeben, das eine Reaktion der Sonde der Temperaturerfassungsvorrichtung (1, 2, 3) anzeigt,
einen ersten Vergleicher zum Vergleichen der Reaktion der zweiten Temperaturerfassungsvorrichtung (2) mit der Reaktion der dritten Temperaturerfassungsvorrichtung (3), und zum Vergleichen der Reaktion der ersten Temperaturerfassungsvorrichtung (1) mit der Reaktion der dritten Temperaturerfassungsvorrichtung (3), und der dafür ausgelegt ist, ein erstes Vergleichssignal auszugeben,
einen zweiten Vergleicher zum Vergleichen der Reaktion der zweiten Temperaturerfassungsvorrichtung (2) mit der Reaktion der ersten Temperaturerfassungsvorrichtung (1), und der dafür ausgelegt ist, ein zweites Vergleichssignal auszugeben,
einen Vergleichsschaltkreis (200), der dafür ausgelegt ist, das erste Vergleichssignal und das zweite Vergleichssignal zu empfangen und miteinander zu vergleichen, um die Eigenschaften des zu überwachenden Fluids zu bestimmen und ein Testsignal auszugeben;
und einen Ausgangsschaltkreis (9), der dafür ausgelegt ist, ein Testsignal zu empfangen, und Mittel zum Anzeigen der Eigenschaften des zu überwachenden Fluids umfasst.

2. Überwachungsvorrichtung nach Anspruch 1, die ferner einen Steuerkreis umfasst, der in Verbindung mit dem Leistungsschaltkreis (7) angeordnet ist, um den Leistungsschaltkreis (7) zu steuern.

3. Überwachungsvorrichtung nach Anspruch 1 oder Anspruch 2, wobei die erste Stromquelle (20) und die zweite Stromquelle (22) so angeordnet sind, dass sie die Temperaturerfassungsvorrichtungen (1, 2) mit einem festen Verhältnis versorgen.

4. Überwachungsvorrichtung nach Anspruch 1, Anspruch 2 oder Anspruch 3, wobei die Vorrichtung mindestens vier Sensoren enthält und einer der Sensoren ein redundanter Sensor ist.

5. Überwachungsvorrichtung nach einem der vorhergehenden Ansprüche, wobei die Eigenschaft des Fluids eine aus folgender Gruppe ist; eine thermische Eigenschaft, ein Gaszustand, ein flüssiger Zustand.

6. Überwachungsvorrichtung nach einem der vorhergehenden Ansprüche, wobei die Temperaturerfassungsvorrichtung (1, 2, 3) eine aus folgender Gruppe ist; Thermoelement, thermische Widerstandsvorrichtung (RTD - Resistive Thermal Device), thermische Dispersionsvorrichtung und Platinwiderstandsthermometer, vorzugsweise PT100 oder PT1000.

7. Überwachungsvorrichtung nach einem der vorhergehenden Ansprüche, wobei die Sensoren (1, 2, 3) in äußeren metallischen Ummantelungen (4) eingeschlossen sind, wobei die Ummantelungen (4) in das zu überwachende Fluid eingetaucht werden können.

8. Überwachungsvorrichtung nach einem der vorhergehenden Ansprüche, die ferner ein Mittel zur elektrischen Ausgabe und hörbaren Warnung umfasst, das auf das Testsignal an dem Ausgangsschaltkreis (9) anspricht.

9. Überwachunrisvorrichtung nach einem der vorhergehenden Ansprüche, die eine Vielzahl von Sensoren (1, 2, 3) umfasst, wobei die Anzahl der Sensoren größer als drei ist.

10. Überwachungsvorrichtung nach einem der vorhergehenden Ansprüche, wobei der Erfassungsschaltkreis (8) mindestens einen PID-Regler (26) umfasst.

11. Überwachungsvorrichtung nach einem der vorhergehenden Ansprüche, die ferner ein einzelnes Gehäuse (10) umfasst, das dafür ausgelegt ist, die Sensoren aufzunehmen.

12. Verfahren zum Überwachen eines Fluids in einem System, wobei das Verfahren das Bereitstellen von mindestens drei Sensoren (1, 2, 3) und einer Vorrichtung zum Ausführen der folgenden Verfahrensschritte umfasst:
a) Einführen der Sensoren (1, 2, 3) in ein zu überwachendes Fluid; und das weiterhin folgende kennzeichnende Verfahrensschritte umfasst:
b) Ausführen einer ersten Vergleichsstufe, die Folgendes umfasst: (i) Speisen eines ersten Sensors (1) auf eine feste Temperatur oder einen bestimmten Leistungspegel über einem dritten Sensor (3), der mit einem ausreichend niedrigen Pegel gespeist wird, um die Selbsterwärmung zu minimieren;
(ii) Speisen eines zweiten Sensors (2) mit einem ausreichend niedrigen Pegel, um die Selbsterwärmung zu minimieren; (iii) Vergleichen der Reaktion des zweiten Sensors (2) mit der Reaktion des dritten Sensors (3), um den Vergleich aufzuzeichnen;
c) Ausführen einer zweiten Vergleichsstufe, die Folgendes umfasst: (i) Speisen eines zweiten Sensors (2) auf eine feste Temperatur oder einen bestimmten Leistungspegel über einem dritten Sensor (3), der mit einem ausreichend niedrigen Pegel gespeist wird, um die Selbsterwärmung zu minimieren; (ii) Vergleichen der Reaktion des ersten Sensors (1) mit der Reaktion des zweiten Sensors (2), um den Vergleich aufzuzeichnen;
d) Ausführen einer dritten Vergleichsstufe, die Folgendes umfasst: (i) Verringern der Leistung zu dem ersten Sensor (1) auf einen ausreichend niedrigen Pegel, um die Selbsterwärmung zu minimieren und dadurch dem ersten Sensor (1) zu ermöglichen, auf eine Temperatur abzukühlen, die im Wesentlichen der des dritten Sensors (3) entspricht; (ii) Vergleichen der Reaktion des ersten Sensors (1) mit der Reaktion des dritten Sensors (3), um den Vergleich aufzuzeichnen;
e) Ausführen einer vierten Vergleichsstufe, die Folgendes umfasst: (i) Speisen eines ersten Sensors (1) auf eine feste Temperatur oder einen bestimmten Leistungspegel über einem dritten Sensor (3), der mit einem ausreichend niedrigen Pegel gespeist wird, um die Selbsterwärmung zu minimieren; (ii) Vergleichen der Reaktion des ersten Sensors (1) mit der Reaktion des zweiten Sensors (2), um den Vergleich aufzuzeichnen;
f) Ausgeben eines Signals bei einem beliebigen der vorhergehenden Vergleiche, wenn die Messung der elektrischen Eingabe, die für die Erwärmung eines der Sensoren erforderlich ist, nicht einer zuvor erhaltenen Reaktion entspricht.

13. Verfahren nach Anspruch 12, das ferner das Wiederholen der Schritte b) bis f) in einem kontinuierlichen Testzyklus umfasst.

14. Verfahren nach Anspruch 12 oder Anspruch 13, wobei die feste Temperaturdifferenz im Bereich von 2 bis 60 Grad Celsius liegt.

15. Verfahren nach Anspruch 14, wobei die feste Temperaturdifferenz im Bereich von 5 bis 30 Grad Celsius, vorzugsweise 10 Grad Celsius liegt.

## Revendications

1. Un appareil de surveillance comprenant au moins trois capteurs (1, 2, 3) capable de détecter une caractéristique d'un fluide à surveiller, les capteurs (1, 2, 3) étant situés à l'intérieur dudit fluide à surveiller,
chaque capteur comprenant une sonde agencée de façon à contenir un dispositif de détection de température (1, 2, 3),
un circuit électrique (7) comprenant une première source de courant (20), une deuxième source de courant (22) et une troisième source de courant (24), la première source de courant (20) étant raccordée à un premier dispositif de détection de température (1), la deuxième source de courant (22) étant raccordée à un deuxième dispositif de détection de température (2), la troisième source de courant (24) étant raccordée à un troisième dispositif de détection de température (3),
**caractérisé en ce que**
la première source de courant (20) et la deuxième source de courant (22) sont agencées de façon à alimenter des premier et deuxième dispositifs de détection de température respectifs (1, 2) de façon à provoquer un auto-chauffage du premier dispositif de détection de température (1) et du deuxième dispositif de détection de température (2) à une première température, la troisième source de courant (24) étant agencée de façon à alimenter le troisième dispositif de détection de température (3) de façon à provoquer un auto-chauffage minimum du troisième dispositif de détection (3) à une deuxième température, où la première température est une température plus élevée que la deuxième température,
un circuit de détection (8) raccordé à chacun desdits capteurs, chaque circuit (8) comprenant un élément agencé de façon à comparer la tension sur un dispositif de détection de température (1, 2, 3) et à produire en sortie un signal indicatif d'une réponse de la sonde du dispositif de détection de température (1, 2,3),
un premier comparateur destiné à la comparaison de la réponse du deuxième dispositif de détection de température (2) à la réponse du troisième dispositif de détection de température (3) et à la comparaison de la réponse du premier dispositif de détection de température (1) à la réponse du troisième dispositif de détection de température (3) et adapté de façon à produire en sortie un premier signal de comparaison,
un deuxième comparateur destiné à la comparaison de la réponse du deuxième dispositif de détection de température (2) à la réponse du premier dispositif de détection de température (1) et adapté de façon à produire en sortie un deuxième signal de comparaison,
un circuit de comparaison (200) adapté de façon à recevoir et comparer le premier signal de comparaison et le deuxième signal de comparaison de façon à déterminer les caractéristiques du fluide à surveiller et à produire en sortie un signal de test,
et un circuit de sortie (9) adapté de façon à recevoir un signal de test et comprenant un moyen d'indication des caractéristiques du fluide à surveiller.

2. Un appareil de surveillance selon la Revendication 1, comprenant en outre un circuit de commande agencé en communication avec le circuit électrique (7) de façon à commander le circuit électrique (7).

3. Un appareil de surveillance selon la Revendication 1 ou 2, où la première source de courant (20) et la deuxième source de courant (22) sont agencées de façon à alimenter les dispositifs de détection de température (1,2) selon un rapport fixe.

4. Un appareil de surveillance selon la Revendication 1, 2 ou 3, où l'appareil contient au moins quatre capteurs et un des capteurs est un capteur redondant.

5. Un appareil de surveillance selon l'une quelconque des Revendications précédentes, où la caractéristique du fluide est une caractéristique du groupe suivant : une propriété thermique, un état gazeux, un état liquide.

6. Un appareil de surveillance selon l'une quelconque des Revendications précédentes, où le dispositif de détection de température (1, 2, 3) est un dispositif du groupe suivant : thermocouple, dispositif à résistance thermique (RTD), dispositif à dispersion thermique et thermomètre à résistance de platine, de préférence PT100 ou PT1000.

7. Un appareil de surveillance selon l'une quelconque des Revendications précédentes, où les capteurs (1, 2, 3) sont enfermés dans des gaines métalliques extérieures (4), les gaines (4) pouvant être immergées dans le fluide à surveiller.

8. Un appareil de surveillance selon l'une quelconque des Revendications précédentes, comprenant en outre une sortie électrique et un moyen d'alerte audible réactif au signal de test au niveau du circuit de sortie (9).

9. Un appareil de surveillance selon l'une quelconque des Revendications précédentes, comprenant une pluralité de capteurs (1, 2 ,3), où le nombre de capteurs est supérieur à trois.

10. Un appareil de surveillance selon l'une quelconque des Revendications précédentes, où le circuit de détection (8) comprend au moins un régulateur PID (26).

11. Un appareil de surveillance selon l'une quelconque des Revendications précédentes, comprenant en outre un logement unique (10) adapté de façon à loger les capteurs.

12. Un procédé de surveillance d'un fluide à l'intérieur d'un système, le procédé comprenant la fourniture d'au moins trois capteurs (1, 2, 3) et d'un appareil destiné à l'exécution de l'opération de procédé suivante :
a) l'insertion des capteurs (1, 2, 3) dans un fluide à surveiller, et comprenant en outre les opérations de procédé de caractérisation suivantes :
b) l'exécution d'un premier étage de comparaison comprenant (i) l'alimentation électrique d'un premier capteur (1) à une température fixe ou à un niveau d'alimentation électrique déterminé supérieur à celui d'un troisième capteur (3) qui est alimenté à un niveau suffisamment faible de façon à minimiser un auto-chauffage, (ii) l'alimentation électrique d'un deuxième capteur (2) à un niveau suffisamment faible de façon à minimiser un auto-chauffage, (iii) la comparaison de la réponse du deuxième capteur (2) à la réponse du troisième capteur (3) de façon à enregistrer le comparaison,
c) l'exécution d'un deuxième étage de comparaison comprenant (i) l'alimentation électrique d'un deuxième capteur (2) à une température fixe ou un niveau d'alimentation électrique déterminé supérieur à celui d'un troisième capteur (3) qui est alimenté à un niveau suffisamment faible de façon à minimiser un auto-chauffage, (ii) la comparaison de la réponse du premier capteur (1) à la réponse du deuxième capteur (2) de façon à enregistrer le comparaison,
d) l'exécution d'un troisième étage de comparaison comprenant (i) la réduction de l'alimentation vers le premier capteur (1) à un niveau suffisamment faible de façon à minimiser un auto-chauffage permettant au premier capteur (1) de se refroidir à une température sensiblement identique à celle du troisième capteur (3), (ii) la comparaison de la réponse du premier capteur (1) à la réponse du troisième capteur (3) de façon à enregistrer la comparaison,
e) l'exécution d'un quatrième étage de comparaison comprenant (i) l'alimentation électrique d'un premier capteur (1) à une température fixe ou à un niveau d'alimentation électrique déterminé supérieur à celui d'un troisième capteur (3) qui est alimenté à un niveau suffisamment faible de façon à minimiser un auto-chauffage, (ii) la comparaison de la réponse du premier capteur (1) à la réponse du deuxième capteur (2) de façon à enregistrer la comparaison,
f) la production en sortie d'un signal à l'une quelconque des comparaisons précédentes, dans le cas où la mesure de l'entrée électrique nécessaire pour le chauffage de tout capteur ne correspond pas à une réponse obtenue antérieurement.

13. Un procédé selon la Revendication 12, comprenant en outre la répétition des opérations b) à f) dans un cycle de tests continu.

14. Un procédé selon la Revendication 12 ou 13, où la différence de température fixe se situe dans la plage de 2 à 60 degrés centigrades.

15. Un procédé selon la Revendication 14, où la différence de température fixe se situe dans la plage de 5 à 30 degrés centigrades, de préférence 10 degrés centigrades.
